# FASCICULE DE BREVET EUROPEEN

(11) **EP 0 439 408 B1**
(45) Date de publication et mention de la délivrance du brevet: **20.07.1994**
(21) Numéro de dépôt: 91400167.2
(22) Date de dépôt: 25.01.1991
(51) Int. Cl.: A01D 25/04

(54) **Dispositif d'arrachage de tubercules ou de racines cultivées**
Vorrichtung zum Ernten von Rüben oder Knollen
Harvester for root- and potato crops

(30) Priorité: 25.01.1990 FR 9000842
(43) Date de publication de la demande: 31.07.1991
(73) Titulaire: S.A. MOREAU, F-59159 Noyelles Sur Escaut (FR)
(72) Inventeur: Jette, Etienne, F-59159 Marcoing (FR)
(74) Mandataire: Colas, Jean-Pierre

(56) Documents cités:
- FR-A- 2 263 674
- FR-A- 2 407 655
- FR-A- 2 443 194
- FR-A- 2 501 958

## Description

La présente invention est relative à un dispositif pour arracher des tubercules ou racines de plantes cultivées, en particulier des betteraves sucrières, et plus particulièrement à dispositif comprenant des outils d'arrachage à disques.

Les outils à disque comprennent un disque sensiblement vertical, tournant librement en faisant un angle de l'ordre de 10° à 25°, selon leur taille, avec la direction d'avancement, l'arrière du disque étant plus proche de la rangée de betteraves à enlever que l'avant de celui-ci. Le disque est concave en direction des betteraves qu'il doit arracher. Un "patin" formé d'une lame verticale orientée dans le sens de la marche est situé en avant du disque. Il s'enfonce dans le sol sur une faible profondeur, du côté de la rangée de tubercules qui est à l'opposé du disque. Le patin ne constitue pas un outil d'arrachage en lui-même, mais sert à faciliter l'opération. L'axe du disque et le patin sont reliés chacun par un support vertical à une robuste traverse horizontale.

Les outils d'arrachage actuels ont l'inconvénient que les mauvaises herbes, et la terre quand elle est collante, s'accumulent contre la traverse horizontale sur laquelle sont fixés les supports verticaux portant les disques, jusqu'à former des masses importantes. Il faut alors, pour éviter des risques de bourrage, ou de détachement inopiné de grosses masses de terre et d'herbes agglomérées, susceptibles de perturber le fonctionnement des appareils situés en arrière, arrêter la machine et procéder au nettoyage, ce qui est une opération pénible et nuisible au rendement.

Le document FR-A-2.407.655 qui montre les caractéristiques du préambule de la revendication 1, décrit un dispositif d'arrachage dans lequel deux supports verticaux de disque d'arrachage sont placés en avant de la traverse, et le troisième en arrière de celle-ci, tous ces supports étant reliés à la traverse par des colliers de serrage. Il en résulte que la distance horizontale entre un support vertical et la traverse est toujours relativement faible, si bien que le risque de bourrage est important.

La présente invention a pour but de supprimer cet inconvénient.

Pour obtenir ce résultat, l'invention fournit un dispositif d'arrachage de tubercules ou de racines cultivés, comprenant un outil d'arrachage formé d'un disque accompagné d'un patin, le disque étant porté par un arbre vertical solidaire d'un palier à axe horizontal et dans lequel peut tourner le moyeu du disque, l'arbre vertical étant relié à une traverse horizontale qui est située plus haut que le centre du disque et en avant de celui-ci, et qui peut être portée par le châssis d'une machine de récolte, à l'aide de pièces d'appui et maintien serrées sur cette traverse, ce dispositif ayant pour particularité que l'arbre vertical est relié aux pièces d'appui et maintien par un bras dont les dimensions sont telles que le disque passe à faible distance derrière la traverse.

Dans une technique voisine, qui est l'arrachage des betteraves à l'aide de socs vibrants, on a proposé, FR-A-2 332 693, de placer la traverse porteuse en avant des socs d'arrachage, mais la structure décrite dans ce document ne peut être utilisée avec des disques, car une "roue preneuse" qui passe à faible distance au-dessus des socs ne pourrait pas fonctionner avec des disques, dont la hauteur au-dessus du sol est beaucoup plus grande. Le document DE-A-2 632 161 propose également un dispositif d'arrachage à socs vibrants où la traverse porteuse est en avant des socs. Cependant, l'ensemble articulé disposé entre les socs et la traverse porteuse comprend une barre de liaison transversale placée au-dessus des socs, si bien que ce dispositif présente nécessairement, en ce qui concerne l'accumulation d'herbes et terre, les mêmes inconvénients que si la traverse était placée au même endroit.

La disposition de l'invention s'oppose à ce que les masses de terre collante et d'herbes s'accumulent en prenant appui sur la traverse. Il ne se forme par conséquent que des masses agglomérées de volume relativement restreint, et qui ne peuvent pas se rejoindre d'un outil à l'autre en prenant appui sur la traverse.

L'invention va maintenant être décrite de façon plus détaillée à l'aide d'un exemple pratique, illustrés à l'aide des dessins, parmi lesquels :

Figure 1 est une vue en élévation, partiellement en coupe, d'un dispositif d'arrachage équipé d'un disque et d'un patin.

Figure 2 est une vue en plan du dispositif de la figure 3.

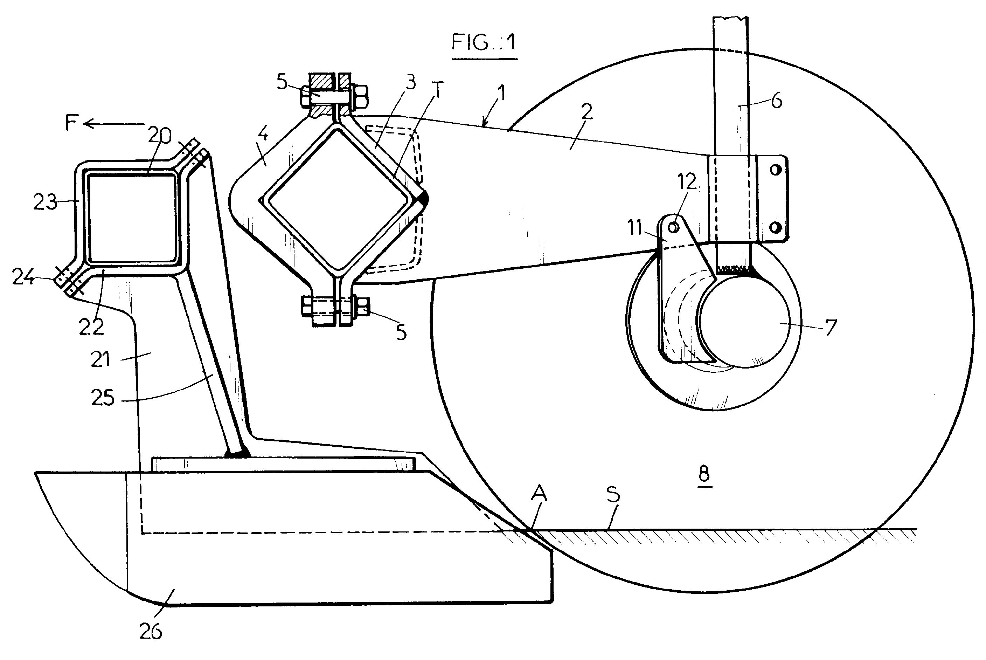

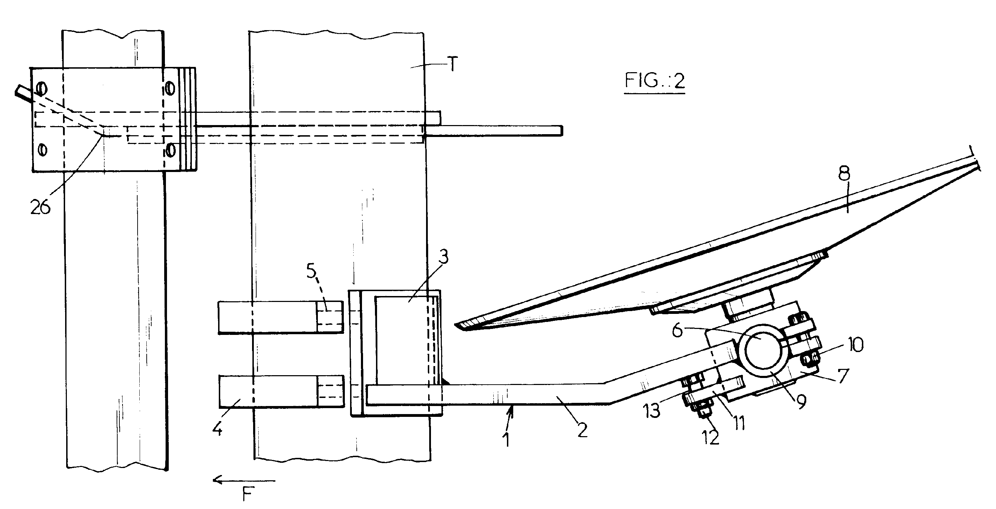

Le dispositif décrit aux figures 1 et 2 est un dispositif à disque. Ce dispositif comprend une traverse porte-disque T, constituée d'une poutre horizontale, à section carrée, dont les faces font un angle de 45° avec l'horizontale. Sur cette traverse est monté un bras horizontal 1, dirigé vers l'arrière par rapport au sens de la marche symbolisé par la flèche F. Le bras 1 est formé essentiellement d'un fer plat vertical 2, sur lequel est soudé à l'avant une pièce d'appui 3, de forme adaptée à celle de la traverse T. Deux pièces de maintien 4 sont fixées sur la pièce 3 par des boulons 5, de telle façon que la traverse T soit solidement serrée entre les pièces 3 et 4, ce qui immobilise le bras horizontal 1 en position. Le fer plat 2, dans sa partie avant, est contenu dans un plan vertical sensiblement parallèle au sens de la marche. A peu près au tiers arrière de sa longueur, il est plié de façon à rester vertical tout en faisant un angle d'environ 10° avec la direction de la marche, voir figure 2. Près de son extrémité arrière, le bras 1 maintient un arbre vertical 6, qui, à sa partie inférieure, supporte le palier 7 sur lequel est monté le disque 8. L'arbre 6 est immobilisé en rotation par rapport au bras 1 grâce à une pince de maintien 9, maintenue serrée par des boulons 10. En outre, une pièce d'immobilisation 11, soudée sur le boîtier du palier 7, porte un alésage fileté 12, dans lequel est montée une vis 13, dont la tête vient en appui sur le fer 2, permettant un réglage précis de l'orientation du disque et un maintien en position de celui-ci. Sur la figure 1, la vis 13, de même que les boulons 10, n'ont pas été représentés.

La partie supérieure de l'arbre 6 porte, de façon classique, un racloir agissant sur la face concave du disque 8, par l'intermédiaire d'un support coudé. Ces éléments n'ont pas été représentés dans un but de clarté.

Le disque 8, de façon classique, est disposé de telle sorte que son plan est à peu près vertical et fait un angle de 15° avec la direction de marche. Il est en forme de coupelle, avec une concavité tournée vers l'avant. Les dimensions des différentes pièces sont telles que le disque 8 passe à faible distance derrière la traverse T, le point A où le disque pénètre dans le sol, étant, quant à lui, nettement plus en arrière.

Le dispositif décrit aux figures 1 et 2 comprend en outre un patin, dont l'action se conjugue avec celle du disque. Ce patin est supporté par une traverse 20, indépendante de la traverse T, située en avant d'elle, et réglable en hauteur par rapport à elle. Cette traverse est constituée par une poutre à section carrée, qui, à la différence de la traverse T, a ses faces horizontales ou verticales. Un bras 21 de support de patin est constitué d'un fer plat vertical, placé dans un plan parallèle au sens de la marche, et qui porte une pièce de fixation 22, de forme adaptée à celle de la traverse 20, et qui coopère avec une pièce de maintien 23, maintenue par des boulons 24 pour maintenir la poutre 20 serrée entre les pièces 22-23. Le bras 21, renforcé par un fer de renfort 25, porte le patin 26, sur lequel il est boulonné. Le patin 26 est constitué par un fer plat, vertical et qui fait un angle d'environ 3° avec la direction de la marche, l'arrière se rapprochant du disque. La partie avant du patin 26 est infléchie d'environ 20° vers le haut de la figure 2, c'est-à-dire dans la direction opposée au plan où se trouve le disque 8.

La figure 1 montre que la traverse 20 se trouve au-dessus du patin 26 lui-même. Il faut observer que le patin n'est pas en lui-même un outil d'arrachage. Il sert seulement à tenir la machine en ligne et à déchausser légèrement la betterave, et il ne déplace le sol que très faiblement, si bien que les problèmes de bourrage sont limités. En dehors de considérations d'encombrement, rien ne s'opposerait cependant à ce que le patin soit supporté par un bras oblique.

## Revendications

1. Dispositif d'arrachage de tubercules ou de racines de plantes cultivées, comprenant un outil d'arrachage formé d'un disque (8) accompagné d'un patin (26), le disque étant porté par un arbre vertical (6) solidaire d'un palier (7) à axe horizontal, et dans lequel peut tourner le moyeu du disque (8), l'arbre vertical (6) étant relié à une traverse horizontale (T) qui est située plus haut que le centre du disque et en avant de celui-ci, et qui peut être portée par le châssis d'une machine de récolte, à l'aide de pièces d'appui et maintien (3, 4) serrées sur cette traverse,
caractérisé en ce que l'arbre vertical (6) est relié aux pièces d'appui et maintien (3, 4) par un bras (1) dont les dimensions sont telles que le disque (8) passe à faible distance derrière la traverse (T).

2. Dispositif selon la revendication 1, caractérisé en ce que le bras (1) est horizontal et situé dans son ensemble entre le niveau du palier (7) et le niveau du sommet du disque (8).

3. Dispositif selon la revendication 2, caractérisé en ce que la traverse (T) est située au même niveau que le bras horizontal (1).

4. Dispositif selon l'une des revendications 1 à 3, dans lequel l'arbre vertical (6) est relié au bras (1) par une pince de maintien (9) qui permet la rotation dudit arbre sur son axe pour un premier réglage de l'angle de chasse du disque et l'immobilisation dudit arbre, caractérisé en ce que le palier (7) porte une pièce d'immobilisation (11) sur laquelle est montée une vis de réglage (13) disposée horizontalement et qui vient en appui sur le bras (1) pour un réglage fin de l'angle de chasse du disque (8).

## Patentansprüche

1. Vorrichtung zum Roden von Knollen oder Wurzeln von Kulturpflanzen, bestehend aus einem Rodewerkzeug, das von einer Scheibe (8) gebildet ist, die von einer Kufe (26) begleitet ist und von einer vertikalen Welle (6) getragen ist, die mit einem Lager (7) mit horizontaler Achse fest verbunden ist, in dem sich die Nabe der Scheibe (8) drehen kann, wobei die vertikale Welle (6) mit einem Querträger (T) verbunden ist, der höher als der Mittelpunkt der Scheibe und vor diesem gelegen ist und von dem Rahmen einer Erntemaschine mit Hilfe von Anlage- und Halteteilen (3, 4), die auf diesen Querträger aufgeklemmt sind, getragen werden kann, dadurch gekennzeichnet, daß die vertikale Welle (6) mit den Auflage- und Halteteilen (3, 4) durch einen Arm (1) verbunden ist, der solche Abmessungen besitzt, daß die Scheibe (8) in einem geringen Abstand hinter dem Querträger (T) hindurchgeht.

2. Vorrichtung nach Anspruch 1, dadurch gekennzeichnet, daß der Arm (1) horizontal und insgesamt zwischen der Höhe des Lagers und der Höhe des Scheitels der Scheibe (8) gelegen ist.

3. Vorrichtung nach Anspruch 2, dadurch gekennzeichnet, daß der Querträger (T) in derselben Höhe wie der horizontale Arm (1) gelegen ist.

4. Vorrichtung nach einem der Ansprüche 1 bis 3, bei der die vertikale Welle (6) mit dem Arm (1) durch eine Halteklemme (9) verbunden ist, die die Drehung der Welle um ihre Achse für eine erste Einstellung des Nachlaufwinkels der Scheibe und die Blockierung dieser Welle gestattet, dadurch gekennzeichnet, daß das Lager (7) ein Blockierteil (11) trägt, auf dem eine horizontal angeordnete Stellschraube (13) montiert ist, die an dem Arm (1) für eine Feineinstellung des Nachlaufwinkels der Scheibe (8) zum Anliegen kommt.

## Claims

1. Apparatus for pulling up tubers or roots of cultivated plants, comprising a pulling tool formed by a disc (8) accompanied by a runner (26), the disc being carried by a vertical shaft (6) integral with a bearing (7) having a horizontal axis, in which the hub of the disc (8) can rotate, the vertical shaft (6) being connected to a horizontal crosspiece (T) which is located higher than the centre of the disc and forward of said disc, and which can be carried by the chassis of a harvester, by means of supporting and retaining members (3,4) secured to said crosspiece, characterised in that the vertical shaft (6) is connected to the supporting and retaining members (3,4) by an arm (1) the dimensions of which are such that the disc (8) passes close behind the crosspiece (T).

2. Apparatus according to claim 1, characterised in that the arm (1) is horizontal and the whole of it is located between the level of the bearing (7) and the level of the top of the disc (8).

3. Apparatus according to claim 2, characterised in that the crosspiece (T) is located at the same level as the horizontal arm (1).

4. Apparatus according to one of claims 1 to 3, wherein the vertical shaft (6) is connected to the arm (1) by a retaining clamp (9) which allows said shaft to rotate on its axis for primary adjustment of the angle of attack of the disc and immobilisation of said shaft, characterised in that the bearing (7) carries an immobilising element (11) on which is mounted a horizontally arranged adjusting screw (13) which bears on the arm (1) for fine adjustment of the angle of attack of the disc (8).
